# EUROPEAN PATENT SPECIFICATION

(11) **EP 3 424 668 B1**
(45) Date of publication and mention of the grant of the patent: **13.05.2020**
(21) Application number: 18180933.6
(22) Date of filing: 29.06.2018
(51) Int. Cl.: B29C 45/14, B65D 5/70, B29C 45/00, B29L 31/56, B65D 75/58, B65D 77/32, B29C 37/00, B65D 75/66

(54) **A METHOD OF MANUFACTURING AN OPENING SYSTEM FOR A CONTAINER**
VERFAHREN ZUR HERSTELLUNG EINES ÖFFNUNGSSYSTEMS FÜR EINEN BEHÄLTER
PROCÉDÉ DE FABRICATION D'UN SYSTÈME D'OUVERTURE POUR RÉCIPIENT

(30) Priority: 05.07.2017 EP 17179748
(43) Date of publication of application: 09.01.2019
(73) Proprietor: Tetra Laval Holdings & Finance S.A., 1009 Pully (CH)
(72) Inventor: PALLADINO, Daniele, 42019 Scandiano (IT); BERTANI, Giulio, 41012 Carpi (IT); MARTINI, Pietro, 43122 Parma (IT)
(74) Representative: Tetra Pak - Patent Attorneys SE

(56) References cited:
- EP-A1- 0 506 754
- JP-A- S62 211 117
- US-A- 5 049 336
- US-A1- 2016 325 878

## Description

### Technical Field

The present invention generally relates to the field of opening systems for packaging containers. More particularly, the present invention relates to a method of manufacturing opening systems for containers having food products therein, a related opening system, a packaging material comprising an opening system, and a mold for manufacturing an opening system.

### Background

Today there are several opening systems used for containers depending on how the container is made and how it is used. It is desirable to have an opening mechanism that is easy to operate, e.g. that can break open the container with a sufficiently small force so that people having a lowered muscular capability or motor skill injuries can open the container without difficulties. One type of opening mechanism utilizes an opening strip that is pulled along a portion of the packaging material to create a wide opening, e.g. for facilitating the extraction of a highly viscous filler product from the container. Such opening mechanism typically has injection molded components arranged at the packaging material to be removed when opening the container. Difficulties arise however with previous methods of manufacturing opening mechanisms having molded components due to residues of molded material being deposited so that the force required to break open the container is increased. Further, the force exerted onto the opening mechanism may propagate in directions of the packaging material such that tearing of the material occurs outside the opening zone, which will compromise the intended functionality of the opening mechanism. A further problem is that material residues may cause dislocation of the packaging material at or around the opening zone, which can compromise the structural integrity of the opening and the packaging material with increased risk of unintentional tearing of the opening, e.g. during transportation of the packaging containers.

US 2016/325878 A1 discloses a method of manufacturing an opening system for a container according to the preamble of claim 1.

Hence, an improved method of manufacturing an opening system would be advantageous and in particular allowing for avoiding more of the above mentioned problems and compromises, and in particular providing for an opening mechanism with less manufacturing defects an opening system where less force is required to initially break open the opening.

### Summary

Accordingly, examples of the present invention preferably seek to mitigate, alleviate or eliminate one or more deficiencies, disadvantages or issues in the art, such as the above-identified, singly or in any combination by providing a device according to the appended patent claims.

According to a first aspect a method of manufacturing an opening system for a container is provided. The container comprises a packaging material having an outside and an inside, and a strip zone arranged in the packaging material and being configured to be opened when opening the container. The method comprises molding an injection molded opening element by pressurizing a material from which the opening element is to be formed so that said material propagates from the inside of the packaging material to the outside thereof, through the strip zone, while having arranged a support element at the outside of the packaging material to contact at least part of the strip zone and at least part of the packaging material at a first portion thereof outside the strip zone, along a plane in which the packaging material extends, where said material propagates, and providing the support element with elongated ribs being arranged to contact at least part of the strip zone and at least part of the packaging material at said first portion thereof where said material propagates.

According to a second aspect an opening system for a container is provided. The container comprises a packaging material having an outside and an inside, and a strip zone arranged in the packaging material and being configured to be opened when opening the container. The opening system comprises a support zone formed by injection molding of a material at the inside and the outside of the packaging material, extending through the strip zone, when having arranged a support element at the outside of the packaging material to contact at least part of the strip zone and at least part of the packaging material at a first portion thereof outside the strip zone, along a plane in which the packaging material extends, where said material propagates, and the support zone comprises elongated second ribs formed by injection molding through cavities of the support element when arranged at the outside of the packaging material to contact at least part of the strip zone and at least part of the packaging material at said first portion thereof where said material propagates.

According to a third aspect a packaging material is provided comprising an opening system according to the second aspect, or comprising an opening system manufactured according to the first aspect.

According to a fourth aspect a mold for manufacturing an opening system for a container is provided. The container comprises a packaging material having an outside and an inside, and a strip zone arranged in the packaging material and being configured to be opened when opening the container. The mold being configured to be arranged at the outside and the inside of the packaging material for injection molding of a material at the inside and the outside of the packaging material, extending through the strip zone. The mold comprises a support element configured to be arranged at the outside of the packaging material to contact at least part of the strip zone and at least part of the packaging material at a first portion thereof outside the strip zone, along a plane in which the packaging material extends, where said material propagates, and the support element comprises elongated ribs being configured to contact at least part of the strip zone and at least part of the packaging material at said first portion thereof where said material propagates, whereby, in use, the material is pressurized to propagate between and along the cavities, parallel to a plane in which the packaging material extends.

Further examples of the invention are defined in the dependent claims, wherein features for the second and third aspects of the disclosure are as for the first aspect mutatis mutandis.

Some examples of the disclosure provide for an opening system with less manufacturing defects.

Some examples of the disclosure provide for an opening system where less force is required to initially break open the opening.

Some examples of the disclosure provide for a facilitated and improved injection molding of an opening system.

Some examples of the disclosure provide for an easier opening of the opening system.

Some examples of the disclosure provide for a facilitated manufacturing process.

Some examples of the disclosure provide for an opening system configured to give a cleaner cut or tear of the opening.

Some examples of the disclosure provide for increasing the robustness of the opening system.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which examples of the invention are capable of will be apparent and elucidated from the following description of examples of the present invention, reference being made to the accompanying drawings, in which
Fig. 1a is a side-view of an opening system for a container when being molded according to one example of the disclosure;
Fig. 1b is a side-view of an opening system for a container after being molded according to an example of the disclosure;
Fig. 1c is a side-view of an opening system for a container when being molded with defects;
Fig. 2 is another side-view of an opening system for a container when being molded according to an example of the disclosure;
Fig. 3 is another top-view of an opening system for a container according to an example of the disclosure;
Fig. 4 is another top-view of an opening system for a container according to an example of the disclosure;
Fig. 5 is a flowchart of a method for manufacturing an opening system for a container according to an example of the disclosure.
Fig. 6 is a flowchart of a method for manufacturing an opening system for a container according to an example of the disclosure.

### Detailed Description

Specific examples of the invention will now be described with reference to the accompanying drawings. This invention may, however, be embodied in many different forms and should not be construed as limited to the examples set forth herein; rather, these examples are provided so that this disclosure will be thorough and complete, and will fully convey the scope of the invention to those skilled in the art. The terminology used in the detailed description of the examples illustrated in the accompanying drawings is not intended to be limiting of the invention. In the drawings, like numbers refer to like elements.

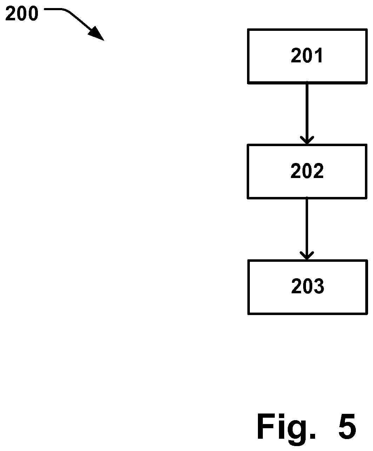

Fig. 5 illustrates a flow chart of a method 200 of manufacturing an opening system 100 for a container. The order in which the steps of the method 200 are described and illustrated should not be construed as limiting and it is conceivable that the steps can be performed in varying order.

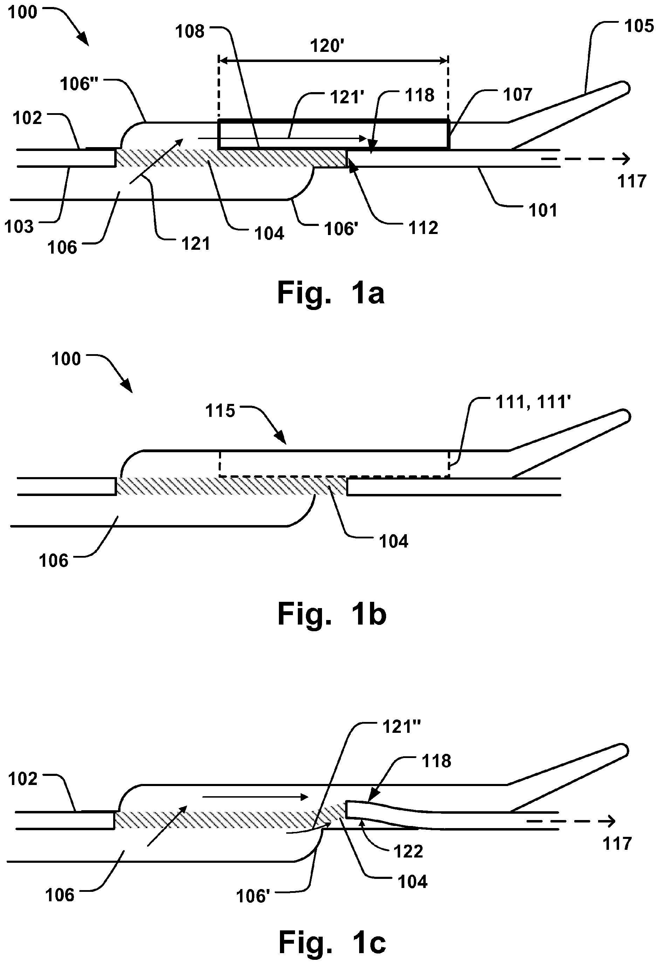

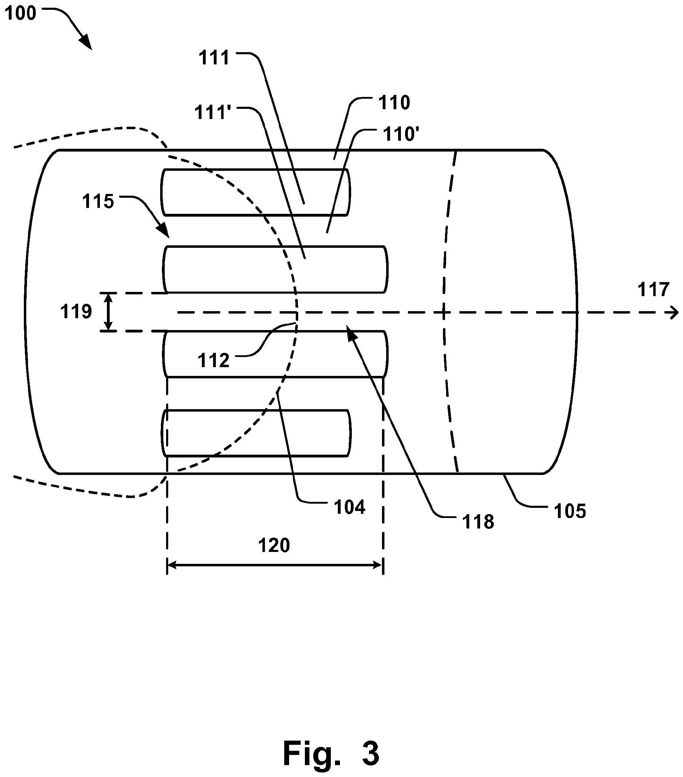

A method 200 of manufacturing an opening system 100 for a container is thus provided, where the container comprises a packaging material 101 having an outside 102 and an inside 103, and a strip zone 104 arranged in the packaging material 101 and being configured to be opened when opening the container. Fig. 1a schematically illustrates a side-view of the opening system 100, where the strip zone 104 is shown with hatched lines. The opening mechanism 105 may comprise an angled portion (illustrated in Fig. 1a at the denotation of 105 of the opening mechanism) that may facilitate lifting the opening mechanism 105 and thereby pull the strip zone 104 in a direction substantially vertically upwards in the schematic illustration of Fig. 1a while breaking the strip zone 104 apart from the remaining packaging material substantially at a periphery 112 of the strip zone 104, indicated in Figs. 1a and in the top-view of Fig. 3. The method 200 comprises molding 201 an injection molded opening element 105 by pressurizing 202 a material 106 from which the opening element 105 is to be formed so that the material propagates from the inside 103 of the packaging material 101 to the outside 102 thereof, through the strip zone 104, while having arranged 203 a support element 107 at the outside 102 of the packaging material 101 to contact at least part of the strip zone 104 and at least part of the packaging material 101 at a first portion 118 thereof outside the strip zone 104, along a plane 117 in which the packaging material 101 extends, where the material 106 propagates. Thus, the first portion 118 is located outside the strip zone 104, with regards to the direction in which the packaging material 101 extends (i.e. in the plane 117), meaning that the first portion 118 will be separated from the strip zone 104 when opening the container and thereby remain in the plane 117 of the packaging material 101 when the container being opened. Fig. 1a schematically illustrates the material 106 being molded to propagate from the inside 103 to the outside 102, through the strip zone 104, so that a molded part 106' is provided at the inside 103 and being connected to an outside part 106" via the strip zone 104. When being molded, the material 106 thus propagates between the inside 103 and the outside 102, and Fig. 1a illustrates an example showing a direction of propagation as indicated by arrows 121, 121'. The material 106 thus propagates from the strip zone 104 to the first portion 118 at the outside 102 of the packaging material 101. The mold 300 has not been included in the illustration of Fig. 1a for clarity of presentation, but has a shape arranged on the outside 102 and the inside 103 during the molding process so that the first and second parts 106', 106", of the opening element 105 can be provided as various shapes such as those schematically illustrated in the example of Fig. 1a. The part of the mold arranged on the outside 102 of the packaging material 101 may thus comprise the support element 107 as specified above.

By having a support element 107 at the outside 102 of the packaging material 101 to contact at least part of the strip zone 104 and at least part of the packaging material 101 at said first portion 118 thereof, where the material 106 propagates during the molding process, a force is exerted from the support element 107 onto the packaging material 101 including the strip zone 104. This provides for stabilizing the packaging material 101 during the molding process so that any risk of dislocation thereof, as the pressurized material 106 propagates to from the inside 103 to the outside 102 to form the opening element 105, is minimized. Since dislocations of the packaging material 101 can be avoided, the material 106 can be deposited at desired locations with respect to the packaging material 101, and the risk of obtaining deposits and residues of the material 106 at wrong positions can be minimized. Having a support element 107 arranged as specified above thus provides for an opening system 100 of improved quality, since unwanted material deposits and residues can have detrimental impact on the function of the opening element 105. For example, Fig. 1c illustrates a case where the material 106 propagates (in the direction of the arrow 121") underneath a portion 122 of the packaging material 101 and the strip zone 104 before propagating through the strip zone 104 to the outside 102. The material 106 thus displaces the packaging material 101 including the strip zone 104 and lifts it from the plane 117. Having a support element 107 arranged to contact at least part of the strip zone 104 and at least part of the packaging material at the first portion 118 thereof outside the strip zone 104, along the plane 117 in which the packaging material 101 extends, thus allows for a pressure to be applied to the aforementioned parts of the packaging material 101 and avoid such dislocations. This in turn provides for avoiding defects increasing the force that needs to be applied in order to open the container. Turning again to the case illustrated in the example of Fig. 1c, the material 106 is deposited at the inside of portion 122, thereby lifting the packaging material 101 as described above. The material 106 being deposited at such position risk increasing the force needed to break apart the strip zone 104 from the packaging material 101 at the first portion 118 (i.e. along the periphery 112 of the strip zone 104 as illustrated in Figs. 1 a and 3), since the material 106 at the inside of portion 122 may fix the strip zone 104 to the first portion 118, across the periphery 112, requiring an additional force to break apart the material 106 arranged at the inside of portion 122. In particular, if the material 106 at the inside of portion 122 is connected to the remaining part 106' at the inside 103, the force needed to break the opening may be increased even further. In this context, it should be noted that the mold arranged on the inside 103, should preferably form a part 106' that does not overlay the periphery 112 of the strip zone 104, in order to avoid the aforementioned problem from the onset. However, the material 106 may propagate back through the strip zone 104 as indicated (arrow 121"). Therefore, having a support element 107 as specified above, provides for avoiding an increase in the force needed to break apart the opening. It is thus also provided for an opening system 100 that gives a cleaner cut or tear of the opening, and a more safe and robust opening system 100 due to minimizing the mentioned defects.

The strip zone 104 may be a defined region of the packaging material 101 comprising the same material as the remaining packaging material 101. The strip zone 104 may be an area in the packaging material that has a reduced resistance to shear forces inflicted into the packaging material 101 when engaging to open the container with the strip zone 104. The strip zone 104 may in that sense comprise a layer of material of reduced thickness, and/or a material having a reduced strength in one or two of the directions of the opening direction of the strip zone 104, or other weakening elements such as micro perforations, or a different type of packaging material. The strip zone 104 may comprise a pre-punched hole in the packaging material 101 that has been covered with a layer of a secondary sealing material such as a laminate, aluminum foil or other material for preventing any food product to leak. The strip zone 104 may be an area that is being ripped off of the packaging material 101 when opening the container, i.e. removed from the packaging material 101. It is also conceivable that the strip zone 104 encompass an area that is otherwise torn or perforated to produce a hole in the strip zone 104 while the torn or perforated material remains largely attached to the packaging material 101, for example along the edges of the strip zone 104.

An opening system 100 for a container is thus also provided according to examples of the present disclosure. As mentioned, the container comprises a packaging material 101 having an outside 102 and an inside 103, and a strip zone 104 arranged in the packaging material 101 and being configured to be opened when opening the container. The opening system 100 comprises a support zone 115 formed by injection molding of a material 106 at the inside and the outside of the packaging material 101, extending through the strip zone 104, when having arranged a support element 107 at the outside 102 of the packaging material 101 to contact at least part of the strip zone 104 and at least part of the packaging material 101 at a first portion 118 thereof outside the strip zone 104, along a plane 117 in which the packaging material 101 extends, where the material 106 propagates. The opening system 100 thus provides for the advantages as described above in relation to the method 200 and Figs. 1 -4.

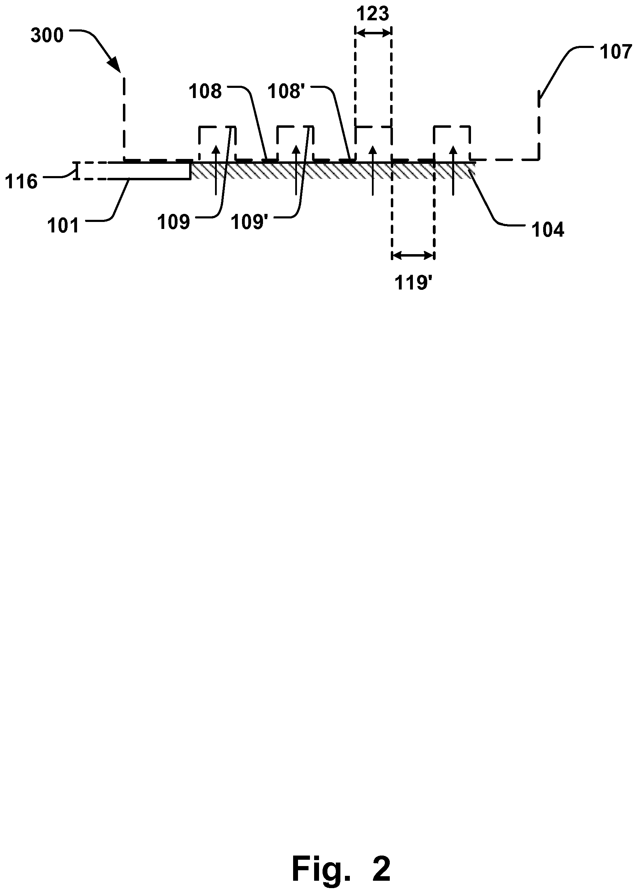

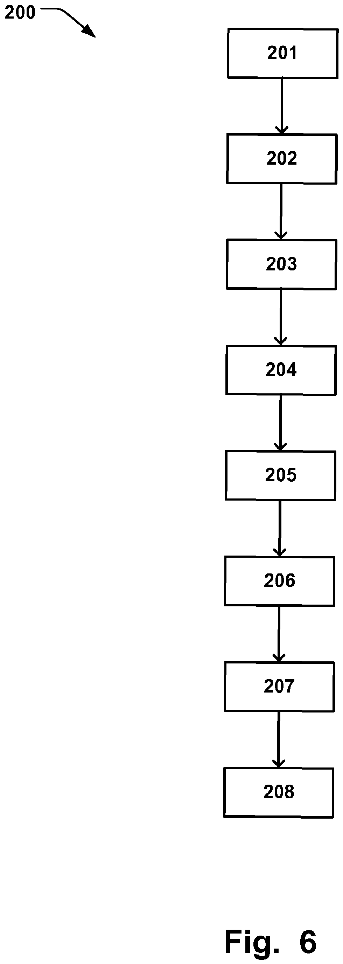

Fig. 6 illustrates a further flow chart of a method 100 of manufacturing an opening system for a container. The order in which the steps of the method 100 are described and illustrated should not be construed as limiting and it is conceivable that the steps can be performed in varying order. The method 200 may thus further comprise providing 204 the support element 107 with elongated ribs 108, 108', being arranged to contact at least part of the strip zone 104 and at least part of the packaging material 101 at the first portion 118 thereof where the material 106 propagates as mentioned above. The elongated ribs 108, 108', are schematically illustrated in the example of Fig. 2 showing a cross-section of Fig. 1a along a direction perpendicular to the direction 117 illustrated in Fig. 1a. The elongated ribs 108, 108', may thus exert a force onto the packaging material 101 including the strip zone 104 so that the material 106 can propagate from the inside 103 to the outside 102 without dislocating the packaging material 101 as elucidated above while allowing for the material 106 to freely propagate in spaces between the ribs 108, 108', to facilitate the forming of the opening element 105 without disruptions.

The material 106 may be pressurized to propagate inside and along cavities 109, 109', arranged between and parallel with the elongated ribs 108, 108', and parallel the plane 117 in which the packaging material 101 extends. The cavities 109, 109', are schematically illustrated in Fig. 2, and the direction in which the material 106 may propagate at the outside 102 is exemplified in Fig. 1a (as indicated by the arrow denoted 121'), i.e. parallel to the plane 117. The material 106 may thus readily assume the intended shape at the outside 102, i.e. as illustrated with the outer part 106" thereof, including the opening element 105 as a whole, since the cavities 109, 109', can provide for such propagation of the material 106 while the interposed ribs 108, 108', prevent dislocations as described above. The number of cavities 109, 109', may be varied depending on the particular opening system 100 such as the configuration, dimensions and intended application thereof.

The method 200 may comprise adjusting 205 a width 119' and/or a length 120' of the ribs 108, 108', perpendicular to a longitudinal extension thereof, so that the strip zone 104, when the material 106 is pressurized to propagate from the inside 103 to the outside 102 of the packaging material 101, remains substantially in the plane 117 of the packaging material 101. The width 119' of the ribs 108, 108', is illustrated in Fig. 2. The width 119' may thus be varied such that the flow of material 106 between the ribs 108, 108', is optimized while allowing for the strip zone 104, or any other adjacent part of the packaging material 101, to have a sufficiently large contact area with the elongated ribs 108, 108', to prevent dislocation from the plane 117 as illustrated in Fig. 1c. E.g. if the width 119' is too small the strip zone 104 may be pushed upwards between the ribs 108, 108'. Further, the length 120', as schematically illustrated in Fig. 1a, may be varied to achieve a sufficient support for the packaging material 101 including the strip zone 104 while providing for the material 106 to readily assume the intended shape by propagating between the ribs 108, 108', along a sufficient length 120' thereof.

The method 200 may comprise applying 206 a force with the support element 107 at the outside 102 of the packaging material 101 across a periphery 112 of the strip zone 104. The periphery 112 is provided between the strip zone 104 and the first portion 118 as illustrated in Figs. 1a and 3. Thus a force may be applied from the support element 107 to the packaging material 101 including the strip zone 104 across the periphery 112, providing for the material 106 to not push beneath the packaging material at, or across, the periphery 112 as illustrated in the case of Fig. 1c.

The support element 107 may apply a force onto the packaging material 101 including the strip zone 104 along the length of the support element 107. The support element 107 may apply a force onto the packaging material 101 including the strip zone 104 along the length 120' of the ribs 108, 108', as described above, and also along the width 119' of the ribs 108, 108'.

The method 200 may comprise varying 207 the width 119' and/or the length 120' as function of a thickness 116 of the packaging material 101. It is thereby possible to optimize the support element 107 for a particular packaging material 101 since e.g. a thicker packaging material 101 may not be equally prone to dislocations as a thinner packaging material, and the width 119' may then be wider since less support is needed. The width 119' and/or the length 120' may also be varied depending on other characteristics of the packaging material 101 such as mechanical characteristics that impact how easily deformations occur. The width 119' and/or the length 120' may be further optimized depending on the dimensions of the strip zone 104 and the material thereof. The width 119' and/or the length 120' may also be varied depending on the material 106 from which the opening element 105 is molded. Further, the height of the ribs 108, 108', i.e. the thickness thereof in a direction perpendicular to the plane 117, may be varied depending on the characteristics of the material 106, and depending on the dimensions and characteristics of the materials of the packaging material 101 and the strip zone 104.

The width of the packaging material 101 not supported by the support element 107, i.e. the distance 123 between two adjacent ribs 108, 108', as illustrated in Fig. 2, may be optimized depending on the mentioned height of the ribs 108, 108', and the material characteristics, such as the stiffness, of the packaging material 101.

The method 200 may comprise adjusting 208 a length 120' of the ribs 108, 108', parallel to a longitudinal extension thereof (i.e. in the direction 117), so that the material 106, when pressurized to propagate from the inside 103 to the outside 102 of the packaging material 101, remains confined to the strip zone 104 on said inside 103 along the periphery 112 of the strip zone 104 where the ribs 108, 108', extend across the strip zone 104 and the first portion 118 of the packaging material 101. Thus, as elucidated above, by having a length 120' of the support element 107 or the ribs 108, 108', that provides for support across the strip zone 104 and the first portion 118, the material 106 can be prevented from propagating across the periphery 112i.e. preventing the case as illustrated in Fig. 1c.

Fig. 1b illustrates an opening system 100 as described above having a support zone 115. As further illustrated in Fig. 3, the support zone 115 may comprise elongated second ribs 110, 110', formed by injection molding through cavities 109, 109', of the support element 107 when arranged at the outside 102 of the packaging material 101 to contact at least part of the strip zone 104 and at least part of the packaging material 101 at the first portion 118 thereof where the material 106 propagates. The elongated second ribs 110, 110', may thus be provided according to the method 200.

40 - 60% of a length 120' of the ribs 108, 108', of the support element 107, parallel to a longitudinal extension thereof (i.e. along direction 117), may be arranged against the packaging material 101 outside the strip zone 104. This may provide for a particularly advantageous range for achieving sufficient support of the packaging material 101 including the strip zone 104, while maintaining an optimized flow of material 106 to form the inside and outside parts 106', 106", of the opening element 105.

As further illustrated in Figs. 1b, 3 and 4 the opening system 100 may comprise second cavities 111, 111', arranged between and parallel with the elongated second ribs 110, 110', and parallel the plane 117 in which the packaging material 101 extends. The second cavities 111, 111', also provides for an advantageous flexibility of the opening element 105, that can facilitate lifting the opening element 105 from the packaging material 101 to break the opening of the container.

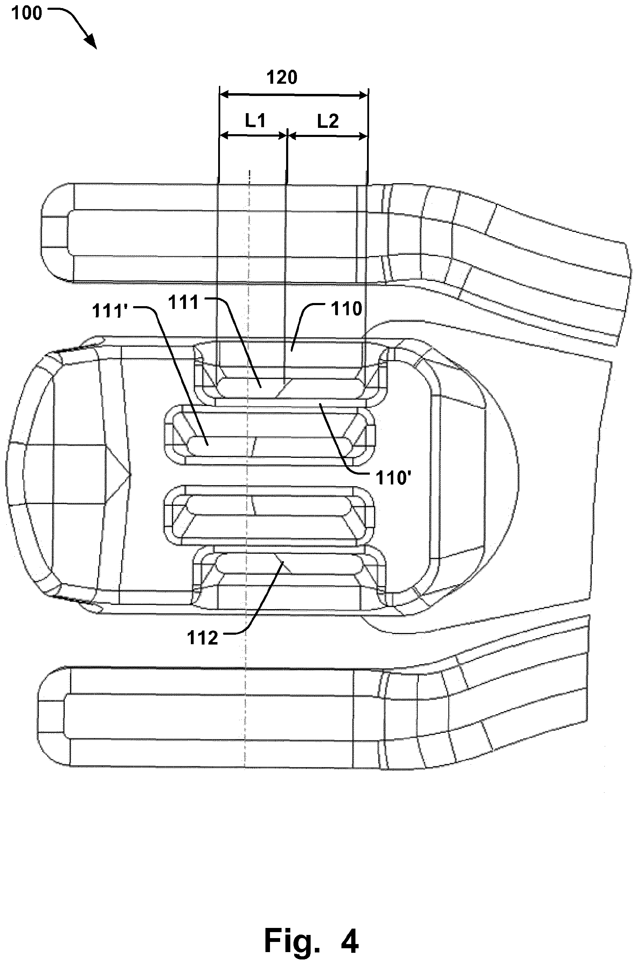

The dimensions such as the length 120 and width 119 of the second ribs 110, 110', are determined by the corresponding dimensions of the ribs 108, 108', of the support element 107. A particularly advantageous length 120 of the second ribs 110, 110', may be in the range of 3 - 4 mm for providing an optimized opening system 100 as described above. The length 120 of the second ribs 110, 110', on either side of the periphery 112 of the strip zone 104 are indicated as L1 and L2 in Fig. 4, and may each be in the range of 1.5 - 2 mm for providing a particularly advantageous opening system 100. It may further be particularly advantageous for achieving the above discussed effects of the opening system 100 if the width 119 of the second ribs 110, 110', is in the range of 0.8 - 1 mm, and/or the spacing between the second ribs 110, 110', (i.e the width of the second cavities 111, 111') is in the range of 0.4 - 0.5 mm.

A packaging material comprising an opening system 100 as described above in relation to Figs. 1-3 is also provided for according to the present disclosure. Further, an opening system 100 manufactured according to the method 200 as described above in relation to Fig. 5 is provided.

Further, a mold 300 for manufacturing an opening system 100 for a container is provided. The container comprises a packaging material 101 having an outside 102 and an inside 103, and a strip zone 104 arranged in the packaging material 101 and being configured to be opened when opening the container. The mold 300 is configured to be arranged at the outside 102 and the inside 103 of the packaging material 101 for injection molding of a material 106 at the inside 103 and the outside 102 of the packaging material 101, extending through the strip zone 104. The mold 104 comprises a support element 107 configured to be arranged at the outside 102 of the packaging material 101 to contact at least part of the strip zone 104 and at least part of the packaging material 101 at a first portion 118 thereof outside the strip zone 104, along a plane 117 in which the packaging material 101 extends, where the material 106 propagates. The mold 300 thus provides for the advantageous effects described above in relation to the method 200 and Figs. 1 - 6.

As mentioned, the support element 107 may comprise elongated ribs 108, 108, being configured to contact at least part of the strip zone and at least part of the packaging material 101 at the first portion 118 thereof where the material 106 propagates, whereby, in use, the material 101 is pressurized to propagate between and along the ribs 108, 108', parallel to a plane 117 in which the packaging material 101 extends.

It should be readily understood that the general principle of the above description is applicable to a variety of packages including food packages, but also other packages serving as containers for viscous fluids (also frozen products). Additionally, the above description is applicable to a variety of packaging materials, such as a pre-laminated packaging material and it is apparent for a skilled person that the above principles would also be valid for other packaging material, also having various types of treatments for e.g. secure an oxygen barrier, prevents light or other common material treatments.

The present invention has been described above with reference to specific examples. However, other examples than the above described are equally possible within the scope of the invention. The different features and steps of the invention may be combined in other combinations than those described. The scope of the invention is only limited by the appended patent claims.

More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used.

## Claims

1. A method (200) of manufacturing an opening system (100) for a container, the container comprising a packaging material (101) having an outside (102) and an inside (103), and a strip zone (104) arranged in the packaging material and being configured to be opened when opening the container, the method comprising
molding (201) an injection molded opening element (105) by
pressurizing (202) a material (106) from which the opening element is to be formed so that said material propagates from the inside of the packaging material to the outside thereof, through the strip zone, while having arranged (203) a support element (107) at the outside of the packaging material to contact at least part of the strip zone and at least part of the packaging material at a first portion (118) thereof outside the strip zone, along a plane (117) in which the packaging material extends, where said material propagates; and **characterized by**
providing (204) the support element with elongated ribs (108, 108') being arranged to contact at least part of the strip zone and at least part of the packaging material at said first portion thereof where said material propagates.

2. Method according to claim 1, wherein the material is pressurized to propagate inside and along cavities (109, 109') arranged between and parallel with the elongated ribs and parallel the plane (117) in which the packaging material extends.

3. Method according to claim 1 or 2, comprising
adjusting (205) a width (119') and/or a length (120') of the ribs, perpendicular to a longitudinal extension thereof, so that the strip zone, when said material is pressurized to propagate from the inside to the outside of the packaging material, remains substantially in the plane of the packaging material.

4. Method according to claim 3, comprising
varying (207) the width and/or the length of the ribs as function of a thickness (116) of the packaging material.

5. Method according to any of claims 1 - 4, comprising
adjusting (208) a length (120') of the ribs, parallel to a longitudinal extension thereof, so that said material, when pressurized to propagate from the inside to the outside of the packaging material, remains confined to the strip zone on said inside along a periphery (112) of the strip zone where the ribs extend across the strip zone and said first portion of the packaging material.

6. Method according to any of claims 1 - 5, wherein 40 - 60% of a length (120') of the ribs, parallel to a longitudinal extension thereof, is arranged against the packaging material outside the strip zone.

7. Method according to any of claims 1 - 6, comprising
applying (206) a force with the support element at the outside of the packaging material across a periphery (112) of the strip zone arranged between said strip zone and the first portion.

8. An opening system (100) for a container, the container comprising a packaging material (101) having an outside (102) and an inside (103), and a strip zone (104) arranged in the packaging material and being configured to be opened when opening the container, the opening system comprises
a support zone (115) formed by injection molding of a material (106) at the inside and the outside of the packaging material, extending through the strip zone, when having arranged a support element (107) at the outside of the packaging material to contact at least part of the strip zone and at least part of the packaging material at a first portion (118) thereof outside the strip zone, along a plane (117) in which the packaging material extends, where said material propagates; and **characterized in that**
the support zone comprises elongated second ribs (110, 110') formed by injection molding through cavities (109, 109') of the support element (107) when arranged at the outside of the packaging material to contact at least part of the strip zone and at least part of the packaging material at said first portion thereof where said material propagates.

9. Opening system according to claim 8, comprising second cavities (111, 111') arranged between and parallel with the elongated second ribs and parallel the plane (117) in which the packaging material extends.

10. Opening system according to claim 8 or 9, wherein a width (119) of the elongated second ribs is in the range of 0.8 - 1 mm, and/or wherein the spacing between the elongated second ribs is in the range of 0.4 - 0.5 mm, and/or wherein a length (120) of the elongated second ribs is in the range of 3 - 4 mm.

11. Packaging material comprising an opening system (100) according to any of claims 8 - 10, or an opening system (100) manufactured according to the method of any of claims 1 - 8.

12. A mold (300) for manufacturing an opening system (100) for a container, the container comprising a packaging material (101) having an outside (102) and an inside (103), and a strip zone (104) arranged in the packaging material and being configured to be opened when opening the container, the mold being configured to be arranged at the outside and the inside of the packaging material for injection molding of a material (106) at the inside and the outside of the packaging material, extending through the strip zone, wherein the mold comprises
a support element (107) configured to be arranged at the outside of the packaging material to contact at least part of the strip zone and at least part of the packaging material at a first portion (118) thereof outside the strip zone, along a plane (117) in which the packaging material extends, where said material propagates; and **characterized in that**
the support element comprises elongated ribs (108, 108) being configured to contact at least part of the strip zone and at least part of the packaging material at said first portion thereof where said material propagates, whereby, in use, the material is pressurized to propagate between and along the cavities, parallel to a plane (117) in which the packaging material extends.

## Patentansprüche

1. Verfahren (200) zur Herstellung eines Öffnungssystems (100) für einen Behälter, wobei der Behälter ein Verpackungsmaterial (101) umfasst, das eine Außenseite (102) und eine Innenseite (103) sowie eine Streifenzone (104) aufweist, die im Verpackungsmaterial angeordnet und dazu ausgelegt ist, beim Öffnen des Behälters geöffnet zu werden, wobei das Verfahren Folgendes umfasst
Formen (201) eines spritzgegossenen Öffnungselements (105) durch
Unterdrucksetzen (202) eines Materials (106), aus dem das Öffnungselement gebildet werden soll, sodass sich das Material von der Innenseite des Verpackungsmaterials, durch die Streifenzone, zur Außenseite davon ausbreitet, während ein Stützelement (107) an der Außenseite des Verpackungsmaterials angeordnet ist (203), um mit zumindest einem Teil der Streifenzone und zumindest einem Teil des Verpackungsmaterials an einem ersten Teil (118) davon außerhalb der Streifenzone, entlang einer Ebene (117), in die sich das Verpackungsmaterial erstreckt, in Kontakt zu kommen, wohin sich das Material ausbreitet; und **gekennzeichnet durch**
Bereitstellen (204) des Stützelements mit länglichen Rippen (108, 108'), die so angeordnet sind, um mit zumindest einem Teil der Streifenzone und zumindest einem Teil des Verpackungsmaterials am ersten Teil davon in Kontakt zu kommen, wo sich das Material ausbreitet.

2. Verfahren nach Anspruch 1, wobei das Material unter Druck gesetzt wird, um sich innerhalb und entlang von Hohlräumen (109, 109') auszubreiten, die zwischen und parallel zu den länglichen Rippen und parallel zur Ebene (117), in die sich das Verpackungsmaterial erstreckt, angeordnet sind.

3. Verfahren nach Anspruch 1 oder 2, das Folgendes umfasst:
Einstellen (205) einer Breite (119') und/oder einer Länge (120') der Rippen, senkrecht zu einer Längserstreckung davon, sodass die Streifenzone, wenn das Material unter Druck gesetzt wird, um sich von der Innenseite zur Außenseite des Verpackungsmaterials auszubreiten, im Wesentlichen in der Ebene des Verpackungsmaterials bleibt.

4. Verfahren nach Anspruch 3, das Folgendes umfasst:
Variieren (207) der Breite und/oder der Länge der Rippen als eine Funktion einer Dicke (116) des Verpackungsmaterials.

5. Verfahren nach einem der Ansprüche 1 - 4, das Folgendes umfasst:
Einstellen (208) einer Länge (120') der Rippen, parallel zu einer Längserstreckung davon, sodass das Material, wenn es unter Druck gesetzt wird, um sich von der Innenseite zur Außenseite des Verpackungsmaterials auszubreiten, auf die Streifenzone an der Innenseite entlang eines Umfangs (112) der Streifenzone, wo sich die Rippen über die Streifenzone erstrecken, und den ersten Teil des Verpackungsmaterials begrenzt bleibt.

6. Verfahren nach einem der Ansprüche 1 - 5, wobei 40 - 60 % einer Länge (120') der Rippen, parallel zu einer Längserstreckung davon, gegen das Verpackungsmaterial außerhalb der Streifenzone angeordnet sind.

7. Verfahren nach einem der Ansprüche 1 - 6, das Folgendes umfasst:
Anwenden (206) einer Kraft mit dem Stützelement an der Außenseite des Verpackungsmaterials über einen Umfang (112) der Streifenzone, angeordnet zwischen der Streifenzone und dem ersten Teil.

8. Öffnungssystem (100) für einen Behälter, wobei der Behälter ein Verpackungsmaterial (101) umfasst, das eine Außenseite (102) und eine Innenseite (103) sowie eine Streifenzone (104) aufweist, die im Verpackungsmaterial angeordnet und dazu ausgelegt ist, beim Öffnen des Behälters geöffnet zu werden, wobei das Öffnungssystem Folgendes umfasst:
eine Stützzone (115), gebildet durch Spritzgießen eines Materials (106), an der Innenseite und der Außenseite des Verpackungsmaterials, sich durch die Streifenzone erstreckend, wenn ein Stützelement (107) an der Außenseite des Verpackungsmaterials angeordnet ist, um mit zumindest einem Teil der Streifenzone und zumindest einem Teil des Verpackungsmaterials an einem ersten Teil (118) davon außerhalb der Streifenzone, entlang einer Ebene (117), in die sich das Verpackungsmaterial erstreckt, in Kontakt zu kommen, wohin sich das Material ausbreitet; und **dadurch gekennzeichnet, dass**
die Stützzone längliche zweite Rippen (110, 110') umfasst, die durch Spritzgießen durch Hohlräume (109, 109') des Stützelements (107) gebildet werden, wenn an der Außenseite des Verpackungsmaterials angeordnet, um mit zumindest einem Teil der Streifenzone und zumindest einem Teil des Verpackungsmaterials am ersten Teil davon in Kontakt zu kommen, wohin sich Material ausbreitet.

9. Öffnungssystem nach Anspruch 8, umfassend zweite Hohlräume (111, 111'), die zwischen und parallel zu den länglichen zweiten Rippen und parallel zur Ebene (117), in die sich das Verpackungsmaterial erstreckt, angeordnet sind.

10. Öffnungssystem nach Anspruch 8 oder 9, wobei eine Breite (119) der länglichen zweiten Rippen im Bereich von 0,8 - 1 mm ist und/oder wobei der Abstand zwischen den länglichen zweiten Rippen im Bereich von 0,4 - 0,5 mm ist und/oder wobei eine Länge (120) der länglichen zweiten Rippen im Bereich von 3 - 4 mm ist.

11. Verpackungsmaterial, umfassend ein Öffnungssystem (100) nach einem der Ansprüche 8 - 10, oder ein Öffnungssystem (100), hergestellt entsprechend dem Verfahren nach einem der Ansprüche 1 - 8.

12. Form (300) zum Herstellen eines Öffnungssystems (100) für einen Behälter, wobei der Behälter ein Verpackungsmaterial (101) umfasst, das eine Außenseite (102) und eine Innenseite (103) sowie eine Streifenzone (104) aufweist, die im Verpackungsmaterial angeordnet und dazu ausgelegt ist, beim Öffnen des Behälters geöffnet zu werden, wobei die Form dazu ausgelegt ist, an der Außenseite und der Innenseite des Verpackungsmaterials angeordnet zu werden zum Spritzgießen eines Materials (106) an der Innenseite und der Außenseite des Verpackungsmaterials, sich durch die Streifenzone erstreckend, wobei die Form Folgendes umfasst:
ein Stützelement (107), dazu ausgelegt, an der Außenseite des Verpackungsmaterials angeordnet zu werden, um mit zumindest einem Teil der Streifenzone und zumindest einem Teil des Verpackungsmaterials an einem ersten Teil (118) davon außerhalb der Streifenzone, entlang einer Ebene (117), in die sich das Verpackungsmaterial erstreckt, in Kontakt zu kommen, wohin sich das Material ausbreitet; und **dadurch gekennzeichnet, dass**
das Stützelement längliche Rippen (108, 108) umfasst, die dazu ausgelegt sind, mit zumindest einem Teil der Streifenzone und zumindest einem Teil des Verpackungsmaterials am ersten Teil davon, wohin sich das Material ausbreitet, in Kontakt zu kommen, wobei, bei Verwendung, das Material unter Druck gesetzt wird, um sich zwischen und entlang der Hohlräume, parallel zu einer Ebene (117), in die sich das Verpackungsmaterial erstreckt, auszubreiten.

## Revendications

1. Procédé (200) de fabrication d'un système d'ouverture (100) pour un récipient, le récipient comprenant un matériau d'emballage (101) ayant un extérieur (102) et un intérieur (103), et une zone de bande (104) située dans le matériau d'emballage et conçue pour être ouverte lors de l'ouverture du récipient, le procédé comprenant l'étape consistant à
mouler (201) un élément d'ouverture moulé par injection (105) en
mettant sous pression (202) un matériau (106) à partir duquel l'élément d'ouverture doit être formé de sorte que ledit matériau se propage de l'intérieur du matériau d'emballage vers l'extérieur de celui-ci, à travers la zone de bande, tout en ayant disposé (203) un élément de support (107) à l'extérieur du matériau d'emballage pour entrer en contact avec au moins une partie de la zone de bande et au moins une partie du matériau d'emballage au niveau d'une première portion (118) de celui-ci à l'extérieur de la zone de bande, le long d'un plan (117) dans lequel s'étend le matériau d'emballage, où ledit matériau se propage ; et **caractérisé par** l'étape consistant à
munir (204) l'élément de support de nervures allongées (108, 108') disposées de sorte à entrer en contact avec au moins une partie de la zone de bande et au moins une partie du matériau d'emballage au niveau de ladite première portion de celui-ci où ledit matériau se propage.

2. Procédé selon la revendication 1, le matériau étant mis sous pression pour se propager à l'intérieur et le long de cavités (109, 109') situées entre et parallèlement aux nervures allongées et parallèlement au plan (117) dans lequel s'étend le matériau d'emballage.

3. Procédé selon la revendication 1 ou 2, comprenant l'étape consistant à
ajuster (205) une largeur (119') et/ou une longueur (120') des nervures, perpendiculairement à une extension longitudinale de celles-ci, de sorte que la zone de bande, lorsque ledit matériau est mis sous pression pour se propager de l'intérieur vers l'extérieur du matériau d'emballage, reste sensiblement dans le plan du matériau d'emballage.

4. Procédé selon la revendication 3, comprenant l'étape consistant à
faire varier (207) la largeur et/ou la longueur des nervures en fonction d'une épaisseur (116) du matériau d'emballage.

5. Procédé selon l'une quelconque des revendications 1 à 4, comprenant l'étape consistant à
ajuster (208) une longueur (120') des nervures, parallèlement à une extension longitudinale de celles-ci, de sorte que ledit matériau, lorsqu'il est mis sous pression pour se propager de l'intérieur vers l'extérieur du matériau d'emballage, reste confiné à la zone de bande sur ledit intérieur le long d'une périphérie (112) de la zone de bande où les nervures s'étendent à travers la zone de bande et ladite première portion du matériau d'emballage.

6. Procédé selon l'une quelconque des revendications 1 à 5, de 40 à 60 % d'une longueur (120') des nervures, parallèlement à une extension longitudinale de celles-ci, étant situés contre le matériau d'emballage à l'extérieur de la zone de bande.

7. Procédé selon l'une quelconque des revendications 1 à 6, comprenant l'étape consistant à
appliquer (206) une force avec l'élément de support à l'extérieur du matériau d'emballage sur une périphérie (112) de la zone de bande située entre ladite zone de bande et la première portion.

8. Système d'ouverture (100) pour un récipient, le récipient comprenant un matériau d'emballage (101) ayant un extérieur (102) et un intérieur (103), et une zone de bande (104) située dans le matériau d'emballage et conçue pour être ouverte lors de l'ouverture du récipient, le système d'ouverture comprenant
une zone de support (115) formée par moulage par injection d'un matériau (106) à l'intérieur et à l'extérieur du matériau d'emballage, s'étendant à travers la zone de bande, lorsqu'un élément de support (107) est situé à l'extérieur du matériau d'emballage pour entrer en contact avec au moins une partie de la zone de bande et au moins une partie du matériau d'emballage au niveau d'une première portion (118) de celui-ci à l'extérieur de la zone de bande, le long d'un plan (117) dans lequel s'étend le matériau d'emballage, où ledit matériau se propage ; et **caractérisé en ce que**
la zone de support comprend des secondes nervures allongées (110, 110') formées par moulage par injection à travers des cavités (109, 109') de l'élément de support (107) lorsqu'il est situé à l'extérieur du matériau d'emballage pour entrer en contact avec au moins une partie de la zone de bande et au moins une partie du matériau d'emballage au niveau de ladite première portion de celui-ci où ledit matériau se propage.

9. Système d'ouverture selon la revendication 8, comprenant des secondes cavités (111, 111') situées entre les secondes nervures allongées et parallèlement à celles-ci et parallèlement au plan (117) dans lequel s'étend le matériau d'emballage.

10. Système d'ouverture selon la revendication 8 ou 9, une largeur (119) des secondes nervures allongées étant dans la plage comprise entre 0,8 et 1 mm, et/ou l'espacement entre les secondes nervures allongées étant dans la plage comprise entre 0,4 et 0,5 mm, et/ou une longueur (120) des secondes nervures allongées étant dans la plage comprise entre 3 et 4 mm.

11. Matériau d'emballage comprenant un système d'ouverture (100) selon l'une quelconque des revendications 8 à 10, ou un système d'ouverture (100) fabriqué selon le procédé selon l'une quelconque des revendications 1 à 8.

12. Moule (300) pour la fabrication d'un système d'ouverture (100) pour un récipient, le récipient comprenant un matériau d'emballage (101) ayant un extérieur (102) et un intérieur (103), et une zone de bande (104) située dans le matériau d'emballage et conçue pour être ouverte lors de l'ouverture du récipient, le moule étant conçu pour être situé à l'extérieur et à l'intérieur du matériau d'emballage pour le moulage par injection d'un matériau (106) à l'intérieur et à l'extérieur du matériau d'emballage, s'étendant à travers la zone de bande, le moule comprenant
un élément de support (107) conçu pour être situé à l'extérieur du matériau d'emballage pour entrer en contact avec au moins une partie de la zone de bande et au moins une partie du matériau d'emballage au niveau d'une première portion (118) de celui-ci à l'extérieur de la zone de bande, le long d'un plan (117) dans lequel s'étend le matériau d'emballage, où ledit matériau se propage ; et **caractérisé en ce que**
l'élément de support comprend des nervures allongées (108, 108) conçues pour entrer en contact avec au moins une partie de la zone de bande et au moins une partie du matériau d'emballage au niveau de ladite première portion de celui-ci où ledit matériau se propage, moyennant quoi, lors de l'utilisation, le matériau est mis sous pression pour se propager entre et le long des cavités, parallèlement à un plan (117) dans lequel s'étend le matériau d'emballage.
